# EUROPEAN PATENT APPLICATION

(11) **EP 3 904 668 A1**
(43) Date of publication of application: **03.11.2021**
(21) Application number: 20305411.9
(22) Date of filing: 28.04.2020
(51) Int. Cl.: F03B 1/00, G01N 21/00, B63G 8/00

(54) **METHOD AND DEVICE FOR INSPECTING HYDRO TURBINE RUNNER**

(71) Applicant: GE Renewable Technologies, 38100 Grenoble (FR)
(72) Inventor: TELLER, Olivier Pierre René Jacques, 38330 SAINT NAZAIRE LES EYMES (FR); THEURER, Charles Burton, NY, 12008 (US); MICELI, Adrienne Harasimowicz, Avon CT, 06001 (US); PALATICKY, Franck, Montréal QC, H2J3G7 (CA); RUTT, Vincent, ST LAMBERT, J4R1K1 (CA)
(74) Representative: Brevalex

(57) **Abstract**

The invention relates to a device (1) for inspecting a cavitation damage or a crack of a runner (7) of a hydro turbine, comprising a remote operated vehicle (20) or an autonomous underwater vehicle, comprising at least one camera and/or scanner, and means (24) for processing images from said camera and/or scanner to generate at least one 3D view or IR thermal view of at least a part of a surface, or of a subsurface, of said runner comprising said cavitation damage or crack.

## Description

### TECHNICAL FIELD AND PRIOR ART

The invention relates to a method and a system designed to inspect runners of hydro turbines and pumps, in particular Bulb, Kaplan, Francis, Pump turbine runners or Pump impellers, in order to detect and characterize defects, especially cavitation damages and cracks.

Known methods of inspecting a turbine runner require at least dewatering the runner and installing a platform underneath or bringing the runner to a workshop, which usually takes weeks, or even months. This means the runner is not available for the power generation during a long time. As a consequence the period between two inspections is long and important defects can be found at each inspection.

Therefore, a new device and a new measurement method are required to inspect runners of hydro turbines more easily.

### PRESENTATION OF THE INVENTION

The invention relates firstly to a device for inspecting a surface of a hydro turbine, in particular of a runner of said turbine, for example comprising a defect such as a cavitation damage or a crack, or, more generally, at least one material loss due for example to a cavitation damage or crack, or to an impact.

Said device comprises a remote operated vehicle (ROV) or autonomous underwater vehicle (AUV), said vehicle comprising for example at least one camera and/or scanner.

In the rest of this description a reference to an ROV should also be understood as covering an AUV.

Such device may further comprise a lighting device.

The scanner can be a laser scanner or an ultrasound or an active infrared scanner.

The ROV can be equipped with one or more camera and/or one or more scanner(s) to provide an inspection of areas of the turbine, for example of a runner of said turbine, preferably a thorough or complete surface metallurgical inspection. In particular, it is able to inspect the surface of blades of the runner and especially the area between two neighbouring blades.

A device according to the invention can combine several kinds of detectors, for example a camera, for example an infrared (IR) camera and/or a multi-spectral camera and/or an ultraviolet (UV) camera and/or a visible range camera and a scanner, for example a laser scanner and/or an ultrasound scanner or probe and/or a contact sensor. Thus, it is possible to combine one or more "long range" detector(s) (like a camera) in order to identify and locate defects in a minimum of time, and one or more "short-range" detector(s) or sensor(s), for example a scanner or a probe or a contact sensor, which can provide characteristics of the defect, such as the depth of a defect.

Preferably, a device according to the invention comprises means for, for example means programmed for, processing images from said camera and/or scanner to generate at least one 3D view or representation or IR thermal view or representation of at least a part of a surface, or of a subsurface, of said turbine or runner, comprising said defect, for example said cavitation damage or crack.

A device according to the invention allows performing an inspection of a hydraulic machine within a day or a couple of days and/or more frequently than with the known methods.

It can be adapted to detect defects at an incipient stage, in particular when they are limited in size. It can also detect larger defects.

The ROV can either propel itself up the draft tube or access the draft tube through the man hole (depending on the watered or dewatered conditions).

A device according to the invention can comprise means to, for example means programmed to, reconstruct a 3D view, for example by laser scanning or by photogrammetry.

It can comprise a camera for a visible part of the spectrum and/or an IR camera.

It can further comprise at least one tool to perform repair work of a part of the surface of said runner, said at least one tool being for example a welding tool and/or a grinding tool and/or a drilling tool and/or a tool to apply a coating. In other words, the ROV may have technical means or tools to repair a detected defect without turbine dismantling and with minimal outage.

If the ROV is equipped with at least one IR camera, said device can further comprise means for locally heating, for example by induction or by a laser, said at least one part of a surface of said runner comprising said cavitation damage or crack. The device can thus perform IR thermal detection or characterization of the defect.

The remote operated vehicle can further comprise:
- memory means memorising data of at least one surface of a runner; the ROV can thus use existing knowledge of a pre-existing 3D image or representation (for example obtained by Computer Assisted Design, CAD) of the runner or of a model of the runner to orient itself on the hydraulic machine or it can generate the 3D image or representation itself, for example by scanning or by photogrammetry. In this case the ROV can be used to perform reverse engineering and, for example by scanning or by photogrammetry, reconstruct the actual 3D image or representation or shape of the runner itself;
- and/or means to, or programmed to, generate data of a map of at least one surface of said runner, in particular a surface comprising of at least one cavitation damage or crack.

A device according to the invention can further comprise means for, for example means programmed for, estimating a position of the device relative to a surface of the hydro turbine. It can thus utilize localisation techniques, for example to ensure that a predefined zone has been investigated. Examples of localisation techniques or of techniques to estimate a position are stereo imaging or SLAM ("Simultaneous Localization and Mapping") or vSLAM (Visual SLAM). These techniques can be used in the frame of the present invention. Alternatively, an optical flow sensor or a LIDAR ("Light Detection and Ranging") can be implemented.

Data measured by the device can be analysed to produce a report of at least one imperfection and/or defect detected by the device, said report possibly including a decision on how to proceed to repair said imperfection and/or defect.

The device may comprise means, for example a movable support on which a camera or scanner if fixed, for displacing a camera or a scanner relative to the blade, in particular to take images of a same portion of the runner at different angles. For example, photogrammetry combines several images of a same location taken from different viewpoints.

A device according to the invention can be mounted on wheels or on tracks to move along an inspected surface. Alternatively, an underwater ROV or AUV can be a propeller-driven vehicle.

A device according to the invention can be driven by driving means, for example by electric power, for example with help of a battery and/or by a motor; a power source can be connected to said device via a tether or can be onboard; the device according to the invention can be controlled wireless or via a tether.

The invention also relates to a method of inspecting at least one surface (for example of one or more blades) of a hydro-turbine or of a runner of a hydro-turbine, in particular for identifying at least one defect, in particular at least one cavitation damage or crack, or, more generally, at least one material loss due to cavitation damage or other means (impact for example), for example on said at least one blade of said hydro-turbine, said method making use of a device according to the invention.

In particular, the invention also relates to a method of inspecting at least one surface (for example of one or more blades) of a hydro-turbine or of a runner of a hydro-turbine, in particular for identifying at least one defect, in particular at least one cavitation damage or crack, or, more generally, at least one material loss due to cavitation damage or other means (impact for example), for example on said at least one blade of said hydro-turbine, comprising:
- introduction of a device or system according to the invention, like that described above, in said hydro-turbine,
- making pictures or scans of a surface, or of a subsurface, of at least one portion of the hydro-turbine or of the runner of said hydro-turbine, for example of at least one blade.

A camera or a scanner can be displaced relative to the hydro-turbine or of the runner of said hydro-turbine, for example relative to a blade, in particular to take images of a same portion or location of the runner at different angles.

A lighting device can illuminate a portion of a turbine or of the runner to be examined, for example in the visible range. Such lighting device can be positioned by a device according to the invention, which also comprises one or more camera(s) or scanner(s).

A method according to the invention can be performed underwater or when the device is dewatered.

Said images or scans can be processed, for example by electronic means or circuit(s) or computer programmed thereto, to generate at least one 3D view and/or an IR thermal view of at least one part of said the hydro-turbine or of the runner of said hydro-turbine, for example comprising said cavitation damage or crack.

A method according to the invention can also comprise generating data of a map of one or more defect(s) of at least one part of the surface, of at least one subsurface part of one or more part(s) of a turbine, in particular of said runner, in particular of said at least one cavitation damage or crack. Such data can be generated by electronic means or circuit(s) or computer programmed thereto.

A 3D view of at least one part of said the hydro-turbine or of the runner of said hydro-turbine can be generated after or by scanning or photogrammetry. Such data can be generated by electronic means or circuit(s) or computer programmed thereto.

Said method may comprise inspecting said the hydro-turbine or of the runner of said hydro-turbine, in particular one or more blade of said runner, and/or one or more stay vanes and/or one or more wicket gates and/or the draft tube. In particular, the ROV can inspect a zone between two neighbouring blades of the runner, where few space is available.

A method according to the invention can also comprise performing different inspections, for example:
- with a camera, for example an IR camera and/or a multi-spectral camera and/or a U.V. camera;
- and with a scanner, for example a laser scanner, and/or and ultrasound scanner or probe and/or a contact sensor.

Thus a method according to the invention makes it possible to combine detection or inspection of the hydro-turbine, or of the runner of said hydro-turbine, at one or more "long range" scale and one or more detection or inspection at one or more "short-range" scale.

A method according to the invention may comprise estimating a position of the device relative to a surface of the hydro turbine, for example by localisation techniques, such as stereo imaging or SLAM ("Simultaneous Localization and Mapping"), or by making use of an optical flow sensor or a LIDAR ("Light Detection and Ranging") or with inertial measurement unit which can be coupled with a 3D model of the turbine.

A method according to the invention can comprise locally heating, for example by induction or laser heating or by a heated jet of water, at least one part of a surface of said hydro-turbine or of the runner of said hydro-turbine, for example comprising a cavitation damage or a crack, and generating at least one IR thermal view of at least one part of said runner.

In a method according to the invention, a device according to the invention, or electronic means or circuit(s) or computer of said device, can be programmed or controlled to find its way in a hydro-turbine, for example in a runner, and/or to perform an inspection, preferably autonomously.

When inspecting blades of a runner of a hydro-turbine, it can travel, or perform inspection by circulating, between two neighbouring blades; the distance between two blades is for example between 50 mm or 100 mm and 300 mm or even 500 mm.

A method according to the invention may further comprise repairing at least part of said cavitation damage or crack, said repairing comprising for example at least one of welding, grinding, drilling, polishing, cladding, applying a coating.

Electronic means or circuit(s), for example a processor, of the device according to the invention or of a computer, can be programmed to perform guidance and/or to send (or generate) control data to (or of) the device according to the invention or of one or more camera or scanner of said device, and/or to perform data processing of measured data.

The hydro-turbine is for example of the Bulb or Kaplan or Francis or Pump type.

### BRIEF DESCRIPTION OF THE DRAWINGS

- Figure 1 shows a runner of a hydro turbine to which the invention can be applied;
- Figures 2A and 2B show examples of cavitation damage in a runner of a hydro turbine;
- Figures 3A and 3B show examples of cracks in a runner of a hydro turbine;
- figure 4 is a schematic representation of a system comprising a remote operating vehicle (ROV) according to the invention and performing an inspection of a blade of a hydro turbine;
- figures 5 and 6 show a remote operating vehicle (ROV) according to the invention performing an inspection of a blade of a hydro turbine;

### DETAILED PRESENTATION OF PARTICULAR EMBODIMENTS

The invention applies to Bulb, Kaplan, Francis, pump turbine runners or pump impellers.

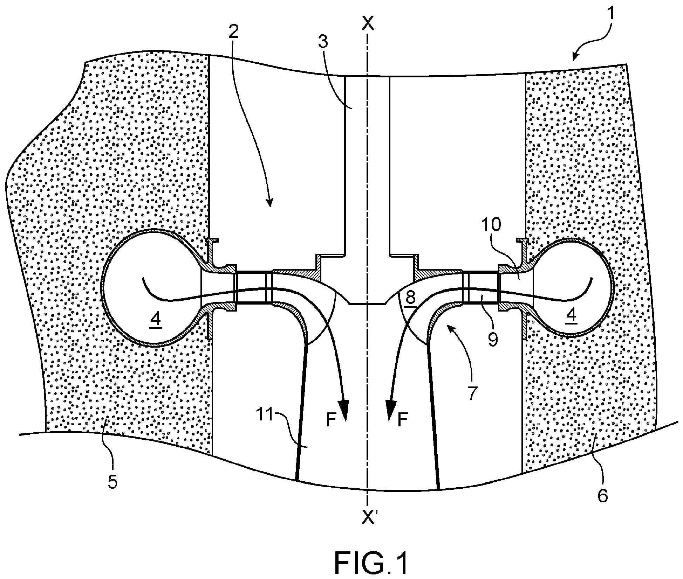

Figure 1 represents a hydraulic machine 1, more precisely a pump turbine 2, for converting hydraulic energy into electrical energy. A shaft 3 is coupled to a runner 7 and to the rotor of a generator (not shown on the figure) which also has an alternator that converts mechanical energy into electrical energy. The machine also includes a volute 4 that is supported by concrete blocks 5 and 6.

A penstock (not shown on the figure) extends between a non-represented upstream reservoir and the volute 4. This penstock forces a water flow to power the turbine. Water flows between blades 8 of the runner 7 and rotates them around an axis x-x' of the shaft 3.

The machine further comprises:
- a distributor, comprising a plurality of movable guide vanes 9 that are evenly distributed around the runner; each of them has an adjustable pitch around an axis parallel to x-x' and can be swivelled to regulate the water flow rate, all guide vanes being oriented with a same angle relative to a closed position;
- a pre-distributor, which comprises a plurality of fixed vanes 10, evenly distributed around the axis of rotation x-x', and disposed upstream of and around the distributor.

Below the runner water is evacuated through a suction pipe 11.

Such a hydraulic machine must be inspected to detect defects, in particular cracks, wear, and cavitation damages, which appear during the use of the machine.

The other kinds of turbines or pump impellers should also be inspected for defects, for example cavitation damages or cracks. In particular, the runners of such turbines also comprise blades that should be inspected for defects, especially cavitation damages or cracks.

Cavitation is the vaporization of a volume of a liquid. When this happens adjacent to a solid, the fluid momentum associated with the collapse of the vapor volume can damage the solid material. This problem can be persistent when high velocities and forces are used to move the fluid, as in a turbine or pump. Often, once cavitation damage has occurred in a given location, the likelihood of additional damage in the same place increases.

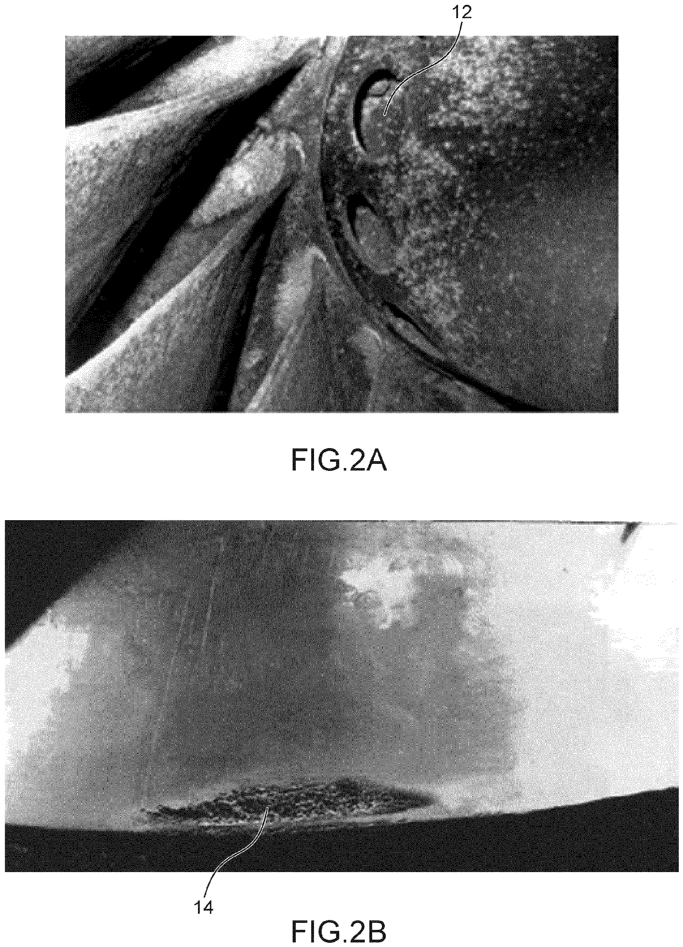

More precisely, cavitation damage usually consists of a surface damage from which material of the hydro-turbine or of the runner of said hydro-turbine is removed; a cavitation damage can have many different sizes; it can for example have a size of about 20cm x 20 cm, but there are also very small cavitation damages (for example at the beginning of the damage) and then the damage can become larger. A first example of cavitation damage 12 (a crown cavitation damage, at a blade to crown junction) is shown on figure 2A. A second example is shown on figure 2B which represents a clearance cavitation damage 14 (blade tip diameter for a Kaplan turbine).

It has to be noted that a cavitation damage can occur anywhere on both sides of a blade 8 (figure 1), on the crown and on the band surface (not shown on figure 1). It is therefore preferable to be able to perform inspection in between the blades. For Francis or pump turbines or pump impellers the inter-blade distance is limited and can be for example of about 200 mm or more generally comprised between 500 mm or 300 mm and 50 mm or 100 mm or 200 mm. Even for the largest inter-blade distances (larger than 400 mm), it is very difficult to inspect the surfaces of the blades.

A cavitation damage can be first identified by its shininess, for example due to a loss of polish of the material.

Later, when the defect has progressed, a 3D image can be made to estimate its volume.

A laser scanner or an ultrasound scanner can be used to characterize the cavitation damage and measure the quantity of removed material. Such scanning device can be added on an existing ROV and can operate both in water and in air. A "3D" representation of the subsurface structure of the material (under the surface on which one or more probes of an ultrasound scanner is/are positioned) can be generated after an examination with an ultrasound scanner has been performed.

A "3D" image should be understood as including a series of XYZ coordinates of points situated on the inspected surface (which is not a flat surface), separated by a given distance (the resolution) or associated with a certain confidence (for example in the case of a point cloud for example) or accuracy (for example in the case of a parametric (high level) description such as a NURB or other geometric description. Such a "3D" image gives a representation of the surface.

Photogrammetry or 3D imaging techniques can also be used to detect and characterize the cavitation damage(s). Photogrammetry combines several images of a same cavitation damage pattern taken from different viewpoints and reconstructs a (not flat) surface in 3D. Photogrammetry produces a 3D point cloud (in 3D space) that is derived using several or even many (sometimes hundreds) of images; it is usually a rather slow process to calculate the 3D point cloud by photogrammetry. Photogrammetry is for example described in "Advances in Photogrammetry, Remote Sensing and Spatial Information Sciences": 2008 ISPRS Congress Book, Edited by Zhilin Li et al, CRC Press, Library of Congress Cataloging-in-Publication Data is applied for ISBN: 978-0-415-47805-2 (hbk); ISBN: 978-0-203-88844-5 (ebook).

In combination with the above means, a device according to the invention can comprise a lighting device, in the visible range, for example a lamp or a laser.

In a variant, a device according to the invention is used in combination with another ROV or AUV which carries or comprises a lighting device, in the visible range, for example a lamp or a laser.

In a variant, a device according to the invention is able to transport one or several, for example 2, light sources to one or more location(s) in the runner and to deposit said light source(s) at said location(s). Then the device according to the invention can explore the area which is illuminated and take images which are then processed, for example by photogrammetry.

The images of a cavitation damage pattern can be obtained by one or more camera(s) (in the visible range of the spectrum) installed on a ROV. Based on the recorded images the 3D shape of the inspected part can be reconstructed wit help of a postprocessing algorithm. More information about such algorithm can be for example found in the article "Wide-baseline Stereo from Multiple Views: a Probabilistic Account" by Christoph Strecha et al., Proceedings of the 2004 IEEE Computer Society Conference on Computer Vision and Pattern Recognition (CVPR'04) 1063-6919/04.

In order to overcome specular highlights or effects, a polar light source and a polarizing filter can be implemented: the polar light source illuminates the inspected surface and the filter is disposed in front of the camera, thus reducing specular highlights or effects.

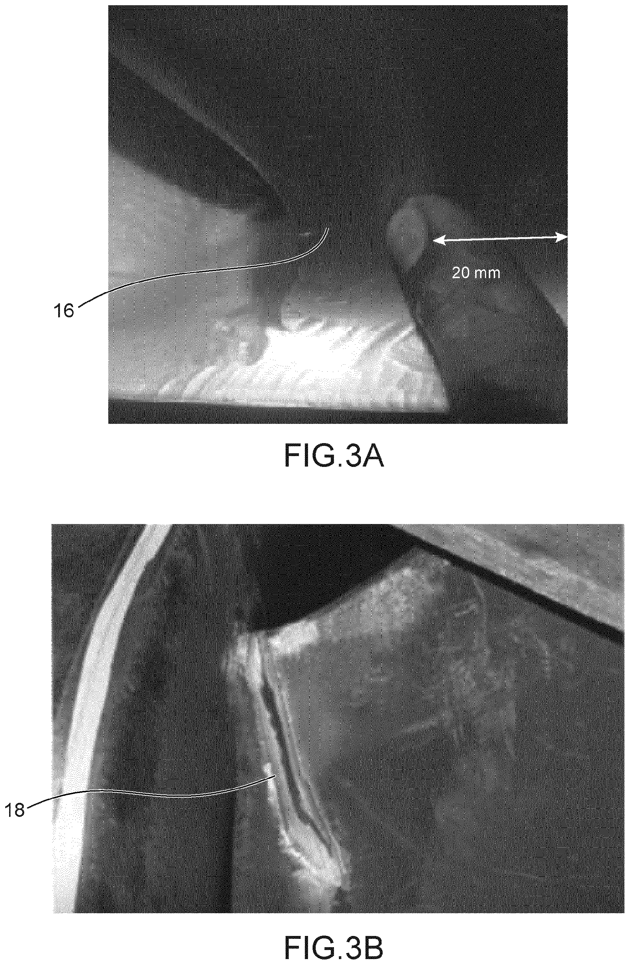

A crack is another example of a defect of a hydro-turbine (or of the runner of said hydro-turbine) to be detected. Cracks are usually surface cracks and then evolve into through-cracks after some time of propagation; they have for example a size of around 5 mm (or more) length, 1 mm (or more) depth, 0.1mm (or more) wide. A first example of a crack 16 is shown on figure 3A: it is a small crack (about 20 mm at band outlet) and should be repaired in a short or medium term in order to avoid a further propagation. A second example is shown on figure 3B which represents an advanced crack 18 (600 mm long at blade inlet); in such case, the hydraulic machine must be stopped in a short or medium term in order to avoid extreme failure. The repair can be done on site (by excavation, welding, grinding).

Cracks are essentially located at the inlet or the outlet of the runner, at the junction between the blades and the crown or the band which are the weakest locations of the runner where the highest stress concentrations occur. For Francis turbines, the majority of cracks is occurring at the runner outlet.

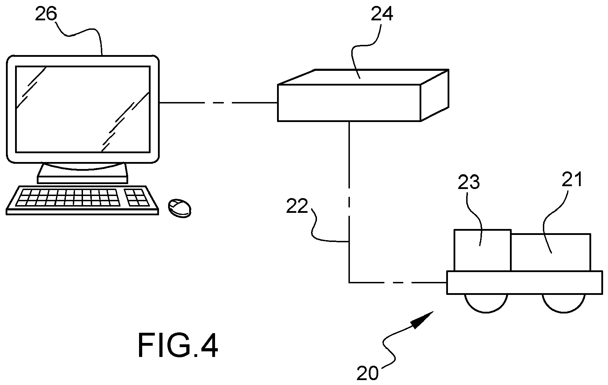

Active IR technology can be used for cracks detection. It requires to locally heat the surface using means or techniques such as induction (see for example: Thermal Imaging NDT at General Electric by H. I. Ringermacher et al., available at: https://www.ndt.net/article/wcndt2012/papers/359 wcndtfinal00359.pdf)
or laser heating or any other heating means like a heated water jet. Such heating means can be controlled by the ROV or the AUV or by control means 24 (figure 4).

Passive IR sensing and thermography (thermal imaging) are for example disclosed in Usamentiaga, Ruben et al. "Infrared thermography for temperature measurement and non-destructive testing." Sensors (Basel, Switzerland) vol. 14,7 12305-48. 10 Jul. 2014, doi:10.3390/s140712305

The surface which was locally heated can then be observed by IR imaging means, for example an IR camera (or thermal imagery camera). Such means can be advantageously combined with a visible camera on a ROV to perform different inspections or detections or characterizations. A temperature change resulting from the heat induction depends on the structure of the material being inspected: IR imaging detects such temperature changes, the IR images revealing defects in the structure.

In a particular embodiment, a ROV comprises an IR camera or a multi-spectral camera or U.V. camera; these cameras are adapted for a "long range" (> 50 cm or 1 m) detection which may be able to identify and locate defects in a minimum of time. The same ROV can also comprise a short-range (< 50 cm or 1 m) detector or sensor, for example a laser scanner or a contact sensor, which can provide characteristics of the defect, such as the depth of a defect. Thus, a device according to the invention can combine long range sensors or detectors and short range (for example limited to a range between 50 cm and 1 m) sensors or detectors.

A ROV ("Remote Operated Vehicle"), preferably rail free, can be used to implement the invention; alternatively, it can be an AUV ("autonomous underwater vehicle").

One example of a ROV is the "VT34 FW" crawler of Dekra (see https://www.dekra-visatec.com/en/detail/index/sArticle/31). It is quite compact (140 x 55 x 185 mm) and is able to access a large number of turbine runners, preferably magnetic. It can be equipped with a camera having one of the above-mentioned features.

Another ROV which can be used in the frame of the invention is the "GNOM Baby" (see https://gnomrov.com/products/gnom-baby/): it is a very compact swimmer operating as a submarine and equipped with a camera. It is compact enough (210x180x150 mm) to enter in the specified 200 mm interblade distance.

Another device which can be used is the "Bike" from GE Inspection Robotics, see for example ***https:*//*inspection-robotics.com*/*bike*/*.***

A ROV or an AUV can be mounted on wheels or on tracks and moves along the inspected surface. Alternatively, an underwater ROV or AUV can be a propeller-driven vehicle.

A ROV 20 (figure 4), in particular any of the above devices, can be equipped with one or more camera(s) (and/or scanning device and/or lighting device) 21 and possibly a lighting device, adapted to implement the invention and also possibly with processing software(s). It is in contact with the blades (or any other inspected part) of a runner and can perform imaging to acquire images at different angles and/or wavelength.

A ROV 20 (figure 4) can be driven by driving means, for example by electric power, for example with help of a battery and/or by a motor 23 (figure 4); a power source can be connected via a tether 22 or can be onboard; the ROV can be controlled wireless or via a tether 2 (figure 4).

It can also comprise tools for repairing surfaces, as explained below.

A plurality of ROVs can be used at the same time to inspect different locations of a runner.

On figure 4 the ROV 20 is equipped with one or more camera(s) 21 to perform imaging according to at least one of the above-mentioned embodiments. It is connected by tether 22 (which can comprise cables and/or wires to exchange data with the ROV and/or to control the ROV and/or to provide the electric power to the ROV) to a computer 24 (for example a microcomputer or a portable computer) which controls the path followed by the ROV and the camera(s) and which sends instructions to perform the appropriate inspection steps. A tether-less or wireless ROV is also possible, see for example https://www.hydromea.com/exray-wireless-underwater-drone/; it operates autonomously with wireless connection.

Data, in particular the images from the camera(s) and/or the scanner and/or from other sensor(s), can be processed (in real time or not) by a processor or by programmable means adequately programmed, in the ROV and/or can be transmitted to computer 24 programmed for processing, in particular to generate a 3D representation or view; an image can be displayed on a display or screen 26 so that an operator can decide whether the hydraulic machine should be repaired. It is also possible to make measurements and generate a map of the defects detected on a blade or on any portion of a hydro turbine; such a map, giving information about the location of the defects, can be generated by computer 24 and possibly displayed.

The illustrated system can be adapted to several ROVs performing inspection of different parts at the same time.

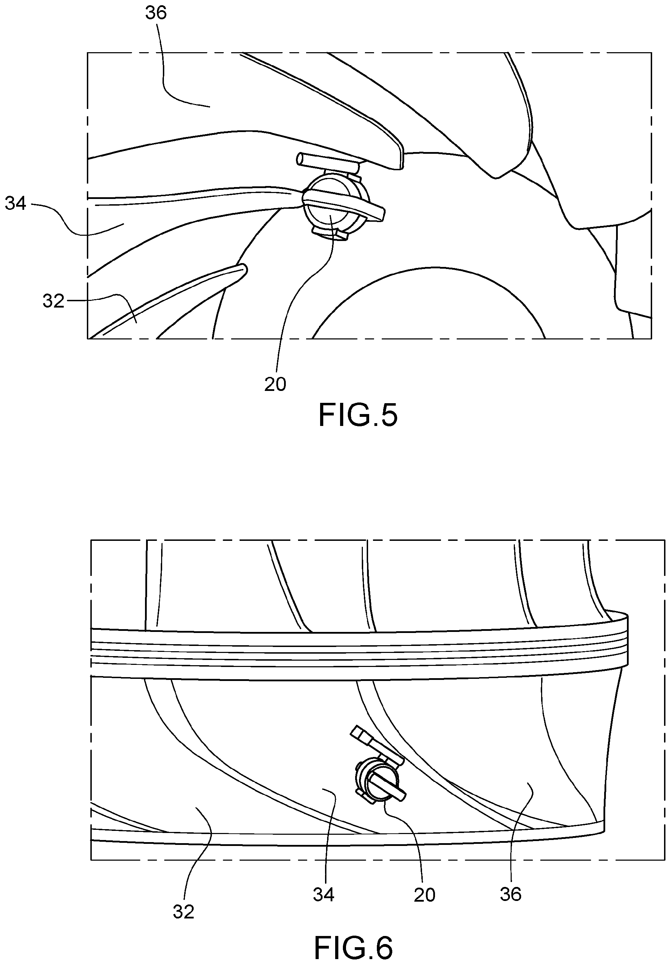

A device according to the invention performing inspection of blades 32, 34, 36 of a runner of a hydro turbine is shown on figures 5 and 6. It comprises a ROV 20 which either propels itself up the draft tube; it is piloted remotely by an operator that uses the camera image to locate the ROV. Alternatively, the ROV is able to find its way to the runner and performs the inspection autonomously. It can have access to the draft tube through the man hole (depending on the watered or dewatered situation). It can be seen on figures 5 and 6 that the ROV can inspect the runner between two neighbouring blades, although the distance between two blades is limited to between 50 mm or 100 mm and 300 mm or even 500 mm.

A device according to the invention may comprise means of positioning in space to estimate its position, for example two cameras to implement stereo imaging. Stereo imaging can produce a depth map (in pixel space) in real time, which can be used for example for navigation.

Alternatively, a sensor can be used, for example:
- an optical flow sensor: an optical flow (or optic flow sensor) detects the pattern of apparent motion of objects, surfaces, and edges in a visual scene caused by the relative motion between an observer and a scene;
- or a LIDAR ("Light Detection and Ranging"): makes use of a laser; a laser pulse is sent out of a transmitter and the light particles (photons) are scattered back to the receiver;
- or an inertial measurement unit coupled with a 3D model of the turbine.

Localization techniques can be used to guide the ROV and, for example, to ensure all areas are investigated. SLAM ("Simultaneous Localization And Mapping ») can also be used for navigation of the device inside the runner of the turbine (see for example C. Cadena et al., "Past, Present, and Future of Simultaneous Localization And Mapping: Towards the Robust-Perception Age", in IEEE Transactions on Robotics 32 (6) pp 1309-1332, 2016). SLAM can produce a 2D or 3D point cloud in real time, using a time of flight sensor like lidar. A device according to the invention can thus comprise such time of flight sensor like lidar.

Alternatively, visual slam (vSLAM) techniques, based on one or more cameras can be implemented. Such techniques are disclosed for example in the article "Visual SLAM algorithms: a survey from 2010 to 2016", by Takafumi Taketomi et al., in IPSJ T Comput Vis Appl 9, 16 (2017). https://doi.org/10.1186/s41074-017-0027-2; and https://link.springer.com/article/10.1186/s41074-017-0027-2.

A device according to the invention can comprise one or more cameras for performing vSLAM localization and mapping.

Such techniques can be performed by the ROV or AUV; in particular, localization and/or positioning data can be processed by a processor in the ROV. Alternatively, or in combination with the above means, a device according to the invention can comprise a lighting device, in the visible range, for example a lamp of a laser, in particular for navigation purposes.

In a variant, a device according to the invention is used in combination with another ROV which carries or comprises a lighting device, in the visible range, for example a lamp of a laser.

According to an embodiment, a device according to the invention can make use of the existing knowledge of a 3D model (which, for example, is memorised in a memory of the device) of the blades (and/or other parts) to orient itself along or around the unit. Alternatively, it can generate the 3D scan itself: a 3D model of the runner can be reconstructed from an actual ROV inspection either using the ROV camera or using specific tools such as a laser and/or a scanner.

A device according to the invention can have trajectory memory capability. In a particular embodiment of a process according to the invention, once a trajectory on one blade has been performed, it can be automatically repeated for all the other blades of the turbine, based on the memorized trajectory, and from one inspection to the next one.

The invention was disclosed for inspecting blades of a runner, however other parts of a hydro-turbine can be inspected according to the invention, for example stay vanes or wicket gates or the draft tube of said hydro-turbine.

In a further embodiment, any of the above described ROV or AUV can comprise means to perform repair work to fix or to mitigate a detected defect (for example a cavitation damage or a crack) of the hydro-turbine or of the runner of said hydro-turbine. Alternatively, a ROV or AUV according to the invention performs detection and/or characterization of one or more defects (for example a cavitation damage or a crack), and another ROV or AUV comprise means to perform repair work to fix said detected defect.

Thus, a ROV or an AUV, in particular a ROV according to the above disclosed invention, can comprise means or tools to repair or mitigate a defect which was detected.

In particular a ROV or an AUV can have:
- a tool to weld, for example a welding torch;
- and/or a tool to apply a coating, for example painting;
- and/or a tool for grinding for example a grinder;
- and/or a tool for drilling holes, for example a drill.

Examples of tools to repair on-site are given in US20180003060, US20180154490, US20200023915 and can be implemented in the frame of the present invention.

Welding material can for example be applied on a surface to repair a cavitation damage. This is particularly efficient for carbon steel runners since a stainless-steel layer is used for repair. Stainless-steel better resists to cavitation damage and therefore such repairs make the runner much less prone to further cavitation damage.

Alternatively, a cavitation resistant coating, for example CaviTec, can be applied to the surface. Material such as CaviTec® is a specific austenitic type material (see for example https://www.castolin.com/sites/default/files/Cavitec_welding_wire_cavitation_erosion.pdf) used for welding repair. This material is specifically resistant to cavitation damage.

Alternatively, a cavitation area can be ground. Grinding (or polishing) a cavitation area allows getting a smooth surface back that is more favourable for water flow. It allows slowing down the cavitation process. The decision for polishing or keeping the surface "as it is" may depend on the severity and the localization of the cavitated area.

Concerning the cracks, it is possible to grind them off. Grinding off the cracks suppresses the stress concentration generated by the cracks. A grinding tool can be clamped to the surface being inspected and can be operated under water or in air. Alternatively, it is possible to fill the ground hole with a composite material to reconstruct the proper hydraulic shape.

Ratherthan grinding off the crack, a hole can be drilled to suppress the crack tip. Drilling a hole is a simpler process to manage than grinding. It also suppresses the stress concentration generated by the cracks.

Cracks can be repaired on site by first being excavated (by grinding or arc gouging), and then repaired by welding. Laser welding or laser cladding can be performed. Such techniques can require the use of a feed wire (in water) or feed wire or powder (in air).

## Claims

1. Device (1) for inspecting a cavitation damage or a crack of a runner (7) of a hydro turbine, comprising a remote operated vehicle (20) or an autonomous underwater vehicle, comprising at least one camera (21) and/or scanner, and means (24) for processing images from said camera and/or scanner to generate at least one 3D view or IR thermal view of at least a part of a surface, or of a subsurface, of said runner comprising said cavitation damage or crack.

2. Device according to claim 1, comprising means to reconstruct a 3D view by photogrammetry.

3. Device according to claim 1 or 2, comprising said at least one camera being a camera for a visible part of the spectrum or an IR camera.

4. Device according to any of claims 1 to 3, further comprising at least one tool to perform repair work of a part of the surface of said runner (1).

5. Device according to claim 4, said at least one tool comprising a welding tool and/or a grinding tool and/or a drilling tool and/or a tool to apply a coating.

6. Device according to any of claims 1 to 5, said at least one camera being an IR camera, said device further comprising means for locally heating, for example by induction, said at least one part of a surface of said runner comprising said cavitation or crack.

7. Device according to any of claims 1 to 6, said remote operated vehicle (20) comprising:
- memory means memorising data of at least one surface of a runner;
- and/or means to generate data of a map of said at least one cavitation damage or crack.

8. Device according to one of claims 1 to 7, further comprising means for estimating a position of the device relative to a surface of the hydro turbine.

9. Method of inspecting at least one cavitation damage or crack of a runner (7) of a hydro turbine (1), comprising:
- positioning at least one device according to one of claims 1 to 8 on the surface of the runner;
- with at least one camera and/or scanner of said device, making images of said at least one cavitation damage or crack;
- processing said images to generate at least one 3D view or an IR thermal view of at least one part of said runner comprising said cavitation damage or crack.

10. Method according to claim 9, said 3D view being generated by photogrammetry.

11. Method according to claim 9 or 10, also comprising generating data of a map of said at least one cavitation damage or crack.

12. Method according to any of claims 9 to 11, said method comprising inspecting one or more blade (32, 34, 36), and/or one or more stay vanes and/or one or more wicket gates and/or the draft tube of said runner.

13. Method according to any of claims 9 to 12, further comprising locally heating, for example by induction or by a laser or by a heated water jet, said at least one part of a surface of said runner comprising said cavitation damage or crack and generating at least one IR thermal view of at least one part of said runner.

14. Method according to one of claims 9 to 13, said method further comprising repairing at least part of said cavitation damage or crack, said repairing comprising for example at least one of welding, grinding, drilling, applying a coating.

15. Method according to one of claims 9 to 14, the hydro-turbine being of the Kaplan or Francis or pump type or reversible pump type.
